# EUROPEAN PATENT SPECIFICATION

(11) **EP 4 311 870 B1**
(45) Date of publication and mention of the grant of the patent: **02.12.2026**
(21) Application number: 23210960.3
(22) Date of filing: 22.10.2015
(51) Int. Cl.: D03D 15/00, C03C 25/36, C08J 5/08, D02G 3/40, C08L 63/00, B32B 17/10

(54) **METHOD FOR FORMING REFORMABLE EPOXY RESIN MATERIALS INTO WEAVABLE YARNS**
VERFAHREN ZUM FORMEN VON VERFORMBAREN EPOXYDHARZMATERIALIEN ZU WEBBAREN GARNEN
PROCÉDÉ DE FORMATION DE MATÉRIAUX DE RÉSINE ÉPOXY REDORMABLE EN FILS TISSABLES

(30) Priority: 22.10.2014 US 201462067131 P; 08.10.2015 US 201562238928 P
(43) Date of publication of application: 31.01.2024
(62) Document number(s) of the earlier application(s) in accordance with Art. 76 EPC: 15791830.1 / 3 209 821
(73) Proprietor: Zephyros, Inc., Romeo, MI 48065 (US)
(72) Inventor: SIBONI, Patrick, 67129 Molsheim Cedex (FR); MEISTERMANN, Laurent, 67129 Molsheim Cedex (FR); MADAUS, Brandon, Richmond, 48062 (US); GUTIERREZ, Alex, Simpsonville, 29681 (US)
(74) Representative: Kutzenberger Wolff & Partner

(56) References cited:
- WO-A1-2007/041782
- WO-A1-2013/159339
- DE-A1- 3 012 288
- US-A- 3 473 950

## Description

### Technical Field

The present invention pertains generally to reformable epoxy resins for use in fiber-based materials, and more particularly to reformable epoxy resin yarn, binders and co-weaved fibers. The invention is set out in the appended claims.

### Background

Industrial fiber materials often require means to hold or bind materials together. Often, thermoplastic materials (e.g., fibers) are used to stitch or bind the materials together. However, such current methods include a number of drawbacks including but not limited to the incompatibility of typical thermoplastics with secondary materials (in particular epoxy-based composite materials), lack of sufficient blending, yarn showing through composite surfaces, behavior of thermoplastics upon sanding or cutting of secondary materials, rigidity of typical thermoplastics and lack of reformability of typical thermoplastics.

Thermoplastic polymers having at least one epoxide group have been described in U.S. Patent Nos. 5,115,075; 4,438,254; 6,011,111; and WO 98/14498 (see e.g., pages 3-8) along with illustrative synthesis conditions (see also U.S. Patent No. 3,317,471 and 4,647,648). Examples of such materials also can be found, without limitation at paragraphs 15-25 of Published U.S. Patent Application No. 20070270515 (Chmielewski et al).

The use of such thermoplastic polymers in a composite material has been disclosed in WIPO Patent Application WO/2008/010823 (addressing in situ reaction of an epoxy and an amine after impregnation). DE3012288A1 relates to a yarn with a prepared core wheel of multifilament synthetic polymeric carrier material with a coating of thermoplastic, in particular polyamide, a process for producing such a yarn, and a sieve-like fabric produced from such yarns. US 3,473,950 A relates to a method for sizing glass fibers comprising coating fibers immediately after attenuation with a solution in a polar organic solvent of (a) a polar organosilane and (b) a reactable epoxy resin and winding the fibers into a coiled package for subsequent combination with epoxy resins.

There is thus a need for materials that have certain thermoplastic capabilities in that they can be formed as fibrous materials for weaving or stitching or forming webs/meshes and yet avoid the issues identified above.

### Summary of the Invention

The invention herein is directed to a method comprising forming a reformable epoxy resin (RER) material into a weavable format, weaving the RER material with a reinforcing fiber to form a woven material and heating the woven material to form a flexible thermoplastic blanket. The reinforcing fiber is selected from the group consisting of glass fibers, carbon fibers, and combinations thereof. The method includes forming the RER material into a multi-filament yarn. The RER material may fall below its glass transition temperature upon exposure to ambient temperature. The flexible thermoplastic blanket is molded to form a composite. One or more of the denier or diameter of the weavable RER may be substantially similar to that of the reinforcing fiber. The RER material may fall below its glass transition temperature prior to forming the composite. A resulting fiber may be free of any phenoxy-containing material.

The teachings herein further contemplate a method which is not according to the invention comprising forming a RER material into a weavable yarn, stitching a multiaxial fabric with the weavable yarn and forming a composite with the multiaxial fabric. The composite may be an epoxy laminate. The composite may be substantially free of any polyester yarn. The method may be substantially free of surface treatment for forming class A surfaces. The method may be substantially free of any surface treatment after a sanding step or cutting step.

The teachings herein further include a method which is not according to the invention comprising forming a RER material into a fiber, forming a web or mesh with the RER fiber, applying the web or mesh to a secondary material, and heating the web or mesh and secondary material so that the web or mesh binds the secondary material. This method of forming a pre-form may be substantially free of any step of removing the web or mesh from the secondary material. The secondary material may be an epoxy material. The RER material may be formed into a film material. The applying step may include injecting the web or mesh into the secondary material. Formation of a pre-form significantly reduces cycle time by eliminating the step of shaping the part in a tool.

Any of the methods described herein may include one or more of the following. The shelf life of the RER material may be at least about 3 months, at least about 6 months, at least about 1 year, or even at least about 5 years. The RER material may be recyclable. The glass transition temperature of the RER material may be higher than room temperature but lower than 200°C. The RER material may be processed at a temperature of less than 200°C, or even less than 150°C. The RER may be treated to reduce the viscosity of the RER material during the forming of the RER into the weavable format or yarn. The RER material may include a difunctional epoxy resin component and an amine component. The ratio of the difunctional epoxy resin and the primary amine may be modified to reduce the viscosity of the RER material during the forming of the RER into the weavable format or yarn. The RER material may fall below its glass transition temperature upon exposure to ambient temperature. The weavable format of the reformable epoxy resin material may have a tenacity of at least about 1.0 cN/dtex, at least about 1.2 cN/dtex or even at least about 1.4 cN/dtex.

The teachings herein facilitate a process for forming and utilizing weavable reformable epoxy resin materials, which may be reformable epoxy resin yarns.

### Description of the Drawings

Fig. 1A illustrates a cross-sectional view of an exemplary fibers of reformable epoxy resin material shown bunched with reinforcing fibers.
Fig. 1B shows the reformable epoxy resin fibers of Fig. 1A commingled with the reinforcing fibers of Fig. 1A.
Fig. 1C shows the reformable epoxy resin fibers of Fig. 1A equally dispersed within the reinforcing fibers of Fig. 1A.
Fig. 2 illustrates an exemplary extruding process for forming the commingled materials described herein.
Fig. 3 illustrates an exemplary stitching of a secondary material with the reformable epoxy resin yarn which is not according to the invention.
Fig. 4 illustrates an exemplary process for forming the commingled materials described herein.

### Detailed Description

The present teachings meet one or more of the above needs by the improved composite structures and methods described herein. The explanations and illustrations presented herein are intended to acquaint others skilled in the art with the teachings, its principles, and its practical application. Those skilled in the art may adapt and apply the teachings in its numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the above description, but should instead be determined with reference to the appended claims.

This application claims the benefit of the filing dates of U.S. Provisional Application Nos. 62/067,131, filed October 22, 2014 and 62/238,928, filed October 8, 2015.

The teachings herein make advantageous use of a RER epoxy yarns that adhere when cooled. The teachings herein contemplate a method for providing composite woven molded structures with the weavable reformable epoxy resin yarn material described herein. The resulting structures are formable and moldable after the RER material is heated and subsequently falls below its glass transition temperature. The RER yarns are particularly compatible with dissimilar reinforcing fibers and epoxy based secondary materials such that the compatibility is improved over typical thermoplastic fibers (e.g., polyester).

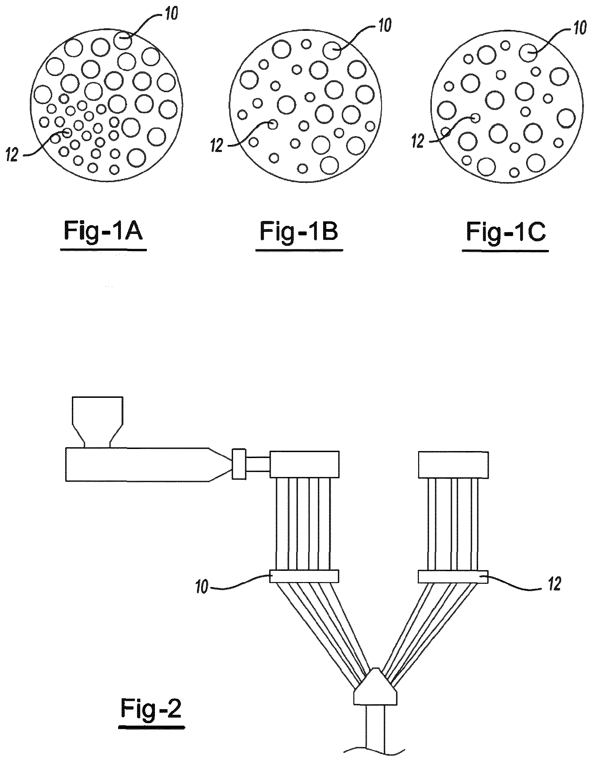

The teachings herein provide for a number of uses for the RER (reformable epoxy resin) fibers. In one embodiment, the RER fibers may be commingled with reinforcing fibers. Examples of which include glass or carbon fibers. The RER fibers may be more compatible with the reinforcing fibers as compared to typical thermoplastic fibers. This may be due to the similarity in size, diameter and/or denier of the RER fibers and reinforcing fibers. These commingled fibers can be used to produce drapable materials and composites which are easier to form than rigid composites, enable more complex shapes, require less heat/energy to process, and has a higher modulus than typical thermoplastic fibers. An example of such commingling possibilities are depicted at Figs. 1A-1C, where varying degrees of comingling are shown with the RER fibers 10 and reinforcing fibers 12. A possible processing method is depicted at Fig. 2 where the RER fibers 10 and reinforcing fibers 12 are co-extruded.

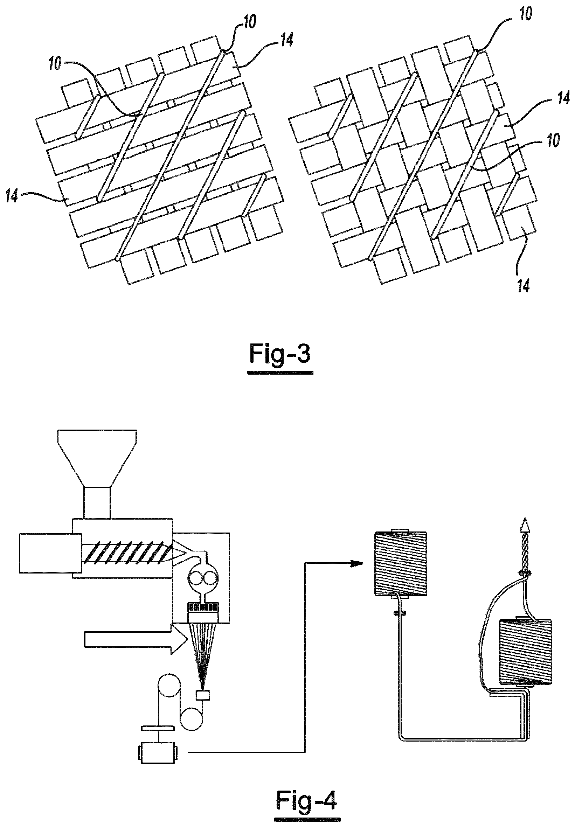

In another embodiment not according to the invention, the RER fibers may be used for stitching together secondary materials (which may be multiaxial fabric materials). An example is shown at Fig. 3 where the RER yarn 10 is stitched into a secondary material 14. In the event that such stitching were utilized to form epoxy laminates, the RER fiber would blend into the epoxy-based material upon heating in a way that typical thermoplastic fibers cannot. Such blending also results in an increase in toughness of the resulting resin, improved appearance, and reduces the need for secondary finishing. As just one example, typical polyester yarn shows through the laminate and is thus visible on surface requiring additional treatment steps for a Class A finish. In addition, polyester yarn shows (sticks upward and outward) when a laminate is cut or sanded requiring additional treatment.

In yet another embodiment not according to the invention, the RER fibers may be modified to form a web or mesh which may then be contacted with a secondary material and may serve to bind that secondary material without requiring removal of the web or mesh.. The secondary material may be an epoxy material and thus particular compatible with the RER web or mesh. The RER material may be formed into a film material and the film may be used to form the web or mesh. The RER fiber/web/mesh may also be injected into the material to facilitate the binding process.

The materials and methods taught herein include possible uses for RER materials. It is possible that the RER materials may be provided initially in a pellet form and then formed into the weavable fibers (e.g., yarn) described herein.

As shown for example at Fig. 4, the RER material may be provided as pellets to a feed hopper which leads directly to a feed screw which leads to a melt block, where the pellets are melted from a solid to a viscous liquid. The RER material moves from the melt block to a spinneret via the force from a melt pump. Upon feeding through the spinneret, the material is formed into fibers and pulled onto a bobbin via a series of godets and a yarn traverse.

Yarns produced via the above method were tested for tenacity. A first yarn, produced with 24 fibers and twisted slightly, had a count of 100 dtex and a resulting tenacity of 1.2 to 1.4 cN/dtex. A second yarn, produced with S (right) and Z (left) twisted (highly twisted) fibers, had a count of 198 dtex and a tenacity of 1.2 cN/dtex. Thus, tenacity was unexpectedly not improved with a higher fiber mass density or increased twisting.

The processing temperature may affect the yarn formation process in that the viscosity of the RER materials my require adjustment to form the desired fibers and yarns. Specifically, the materials may require processing at a temperature of at least 150°C, at least 170°C, at least 190°C or even at least about 200°C. At lower processing temperatures the viscosity of the materials may be too high for formation into fibers. In one embodiment it is possible that the material is formulated to have a lower viscosity (sufficient for forming into fibers) even at temperatures below 200°C, below 170°C, or even below 150°C. However, the temperature for processing the RER materials may continue to be below that of the temperature required to process fibers formed of other materials such as typical thermoplastics. The use of lower processing temperatures reduces the risk of thermal stability of the fiber materials during processing and also allows for easier cooling of the fibers. Cooled fibers minimize any unwanted fiber tackiness so that the fibers are not sticky when wound.

A key advantage of the present teachings over existing commonly used fibers (e.g., polyester fibers) is the improved compatibility with other materials including epoxy-based thermoset epoxy resin matrix materials (commonly utilized in composite structures). Specifically, the RER may be an amine terminated resin that can potentially react with a thermoset resin. The compatibility lies in the RER fibers being epoxy based and having a size that is commonly used in composite fabrics. Additional benefits of the RER material include fast adhesion, and also the ability to re-form and re-mold the yarn with the addition of heat. Adhesion and returning to a solid state upon cooling of the RER begins almost immediately after heating is stopped and full adhesion can occur within about 10 seconds to about 60 seconds (e.g., about 30 seconds). In addition, a RER may be desirable because of its long shelf life. It also may not require storage at a refrigerated temperature, unlike some alternative materials.

As an example, the RER material may be and/or may include a product (e.g., a thermoplastic condensation reaction product) of a reaction of a mono-functional or di-functional species (i.e., respectively, a species having one or two reactive groups, such as an amide containing species), with an epoxide-containing moiety, such as a diepoxide (i.e., a compound having two epoxide functionalities), reacted under conditions for causing the hydroxyl moieties to react with the epoxy moieties to form a generally linear backbone polymer chain with ether linkages. Exemplary RER materials are made with a difunctional epoxy resin and a primary amine which may be bisphenol A diglycidyl ether (BADGE) and monoethanolamine. For some applications that may require a higher glass transition temperature (T_{g}), it is contemplated that BADGE may be replaced by an epoxy monomer with less mobility. Such epoxy monomers may include diglycidylether of fluoren diphenol or 1,6 napthalene diepoxy. Also, it is contemplated that where fire resistance is desired, BADGE can be replaced by a brominated bisphenol A epoxy resin. Alternatively, the RER materials disclosed herein may also be known as poly(hydroxyamino ether) (PHAE) and is illustrated in U.S. Pat. Nos. 5,164,472; 5,275,853; 5,401,814 and 5,464,924. Such polyethers may be prepared by reacting a diglycidyl ether of dihydric aromatic compounds such as the diglycidyl ether of bisphenol A, or a diepoxy-functionalized poly(alkylene oxide) or mixture thereof with a primary amine or a secondary diamine or a monoamine functionalized poly(alkylene oxide) or mixture thereof. Such material generally has a relatively high flexural strength and modulus-often much higher than typical polyolefins (i.e. polyethylene and polypropylene)-and has the added benefit of being melt processable at temperatures of 150 to 200° C. Though other epoxide-containing moieties may be employed, as is taught in U.S. Patent No. 6,011,111 ( see, e.g., Cols. 5-6), and WO 98/14498 ( see, e.g., page 8) such moieties may include at least one mono-functional epoxide and/or a di-funtional epoxide ("diepoxide"). An example of a diepoxide that can be employed in the teachings includes a diglycidyl ether of a dihydric phenol (e.g., resorcinol, biphenol or bisphenol A). Any epoxide-containing moiety herein may be an aliphatic and/or an aromatic epoxide.

Other examples of illustrative materials, functional species and diepoxides are described in U.S. Patent Nos. 5,115,075; 4,438,254; 6,011,111; and WO 98/14498 (see e.g., pages 3-8) along with illustrative synthesis conditions (see also U.S. Patent No. 3,317,471 and 4,647,648). Examples of such materials also can be found, without limitation at paragraphs 15-25 of Published U.S. Patent Application No. 20070270515 (Chmielewski et al).

Forming the RER materials into the desired weavable format may require particularly high temperatures during the extrusion process. Accordingly, it may be necessary to reduce the viscosity of the RER as the heat tends to increase the viscosity to an undesirable range. This may be achieved by modifying the ratio of the difunctional epoxy resin and primary amine such that the molecular chain length is reduced thus reducing the viscosity.

Unless otherwise stated, any numerical values recited herein include all values from the lower value to the upper value in increments of one unit provided that there is a separation of at least 2 units between any lower value and any higher value. As an example, if it is stated that the amount of a component, a property, or a value of a process variable such as, for example, temperature, pressure, time and the like is, for example, from 1 to 90, preferably from 20 to 80, more preferably from 30 to 70, it is intended that intermediate range values such as (for example, 15 to 85, 22 to 68, 43 to 51, 30 to 32 etc.) are within the teachings of this specification. Likewise, individual intermediate values are also within the present teachings. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the of a range in terms of at "'x' parts by weight of the resulting polymeric blend composition" also contemplates a teaching of ranges of same recited amount of "x" in percent by weight of the resulting polymeric blend composition."

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The term "consisting essentially of to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist of, or consist essentially of the elements, ingredients, components or steps.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

It is understood that the above description is intended to be illustrative and not restrictive.

## Claims

1. A method comprising:
i. forming a reformable epoxy resin material (10) into a weavable multi-filament yarn;
ii. weaving the reformable epoxy resin material (10) with a reinforcing fiber (12) to form a woven material, wherein the reinforcing fiber (12) is selected from the group consisting of glass fibers, carbon fibers, and combinations thereof;
iii. heating the woven material to form a flexible thermoplastic blanket; and
iv. molding the flexible thermoplastic blanket to form a composite.

2. The method according to claim 1, wherein the reformable epoxy resin material (10) is recyclable.

3. The method according to any of the preceding claims, wherein the glass transition temperature of the reformable epoxy resin material (10) is higher than room temperature but lower than 200°C.

4. The method according to any of the preceding claims, wherein the reformable epoxy resin material (10) is processed at a temperature of less than 200°C, preferably less than 150°C.

5. The method according to any of the preceding claims, wherein the reformable epoxy resin is treated to reduce the viscosity of the reformable epoxy resin material (10) during the forming of the reformable epoxy resin into the weavable yarn.

6. The method according to any of the preceding claims, wherein the reformable epoxy resin material (10) includes a difunctional epoxy resin component and an amine component.

7. The method according to claim 6, wherein the ratio of the difunctional epoxy resin and the primary amine is modified to reduce the viscosity of the reformable epoxy resin material (10) during the forming of the reformable epoxy resin into the weavable format or yarn.

8. The method of any of the preceding claims, wherein the weavable format of the reformable epoxy resin material (10) has a tenacity of at least about 1.0 cN/dtex, at least about 1.2 cN/dtex or even at least about 1.4 cN/dtex.

## Patentansprüche

1. Ein Verfahren, umfassend:
i. Formen eines reformierbaren Epoxidharzmaterials (10) zu einem webbaren Multifilamentgarn;
ii. Verweben des reformierbaren Epoxidharzmaterials (10) mit einer Verstärkungsfaser (12) zu einem Gewebe, wobei die Verstärkungsfaser (12) aus der Gruppe ausgewählt ist, die aus Glasfasern, Kohlenstofffasern und Kombinationen davon besteht;
iii. Erhitzen des Gewebes, um eine flexible thermoplastische Matte zu bilden; und
iv. Formen der flexiblen thermoplastischen Matte, um einen Verbundwerkstoff zu bilden.

2. Das Verfahren nach Anspruch 1, wobei das reformierbare Epoxidharzmaterial (10) recycelbar ist.

3. Das Verfahren nach einem der vorstehenden Ansprüche, wobei die Glasübergangstemperatur des reformierbaren Epoxidharzmaterials (10) höher als Raumtemperatur, aber niedriger als 200 °C ist.

4. Das Verfahren nach einem der vorstehenden Ansprüche, wobei das reformierbare Epoxidharzmaterial (10) bei einer Temperatur von weniger als 200 °C, vorzugsweise weniger als 150 °C, verarbeitet wird.

5. Das Verfahren nach einem der vorstehenden Ansprüche, wobei das reformierbare Epoxidharz behandelt wird, um die Viskosität des reformierbaren Epoxidharzmaterials (10) während der Formung des reformierbaren Epoxidharzes zu dem verwebbaren Garn zu verringern.

6. Das Verfahren nach einem der vorstehenden Ansprüche, wobei das reformierbare Epoxidharzmaterial (10) eine difunktionelle Epoxidharzkomponente und eine Aminkomponente enthält.

7. Das Verfahren nach Anspruch 6, wobei das Verhältnis des difunktionellen Epoxidharzes zum primären Amin so angepasst wird, dass die Viskosität des reformierbaren Epoxidharzmaterials (10) während der Umformung des reformierbaren Epoxidharzes in die webbare Form oder das Garn verringert wird.

8. Das Verfahren nach einem der vorstehenden Ansprüche, wobei die webbare Form des reformierbaren Epoxidharzmaterials (10) eine Reißfestigkeit von mindestens etwa 1,0 cN/dtex, mindestens etwa 1,2 cN/dtex oder sogar mindestens etwa 1,4 cN/dtex aufweist.

## Revendications

1. Procédé comprenant:
i. la transformation d'un matériau à base de résine époxy reformable (10) en un fil multifilament tissable;
ii. le tissage du matériau en résine époxy reformable (10) avec une fibre de renfort (12) pour former un matériau tissé, dans lequel la fibre de renfort (12) est choisie parmi le groupe constitué de fibres de verre, de fibres de carbone et de combinaisons de celles-ci;
iii. chauffer le matériau tissé pour former une nappe thermoplastique souple; et
iv. mouler la nappe thermoplastique souple pour former un composite.

2. Procédé selon la revendication 1, dans lequel la résine époxy reformable (10) est recyclable.

3. Procédé selon l'une quelconque des revendications précédentes, dans lequel la température de transition vitreuse du matériau à base de résine époxy reformable (10) est supérieure à la température ambiante mais inférieure à 200 °C.

4. Procédé selon l'une quelconque des revendications précédentes, dans lequel le matériau à base de résine époxy reformable (10) est traité à une température inférieure à 200 °C, de préférence inférieure à 150 °C.

5. Procédé selon l'une quelconque des revendications précédentes, dans lequel la résine époxy reformable est traitée afin de réduire la viscosité du matériau à base de résine époxy reformable (10) pendant la transformation de la résine époxy reformable en fil tissable.

6. Procédé selon l'une quelconque des revendications précédentes, dans lequel le matériau à base de résine époxy reformable (10) comprend un composant de résine époxy difonctionnelle et un composant aminé.

7. Procédé selon la revendication 6, dans lequel le rapport entre la résine époxy difonctionnelle et l'amine primaire est modifié afin de réduire la viscosité du matériau à base de résine époxy reformable (10) pendant la transformation de la résine époxy reformable en un format tissable ou en fil.

8. Procédé selon l'une quelconque des revendications précédentes, dans lequel le format tissable du matériau à base de résine époxy reformable (10) présente une ténacité d'au moins environ 1,0 cN/dtex, d'au moins environ 1,2 cN/dtex, voire d'au moins environ 1,4 cN/dtex.
